# EUROPEAN PATENT SPECIFICATION

(11) **EP 1 475 924 B1**
(45) Date of publication and mention of the grant of the patent: **27.02.2008**
(21) Application number: 03388035.2
(22) Date of filing: 09.05.2003
(51) Int. Cl.: H04L 12/56

(54) **Wireless ad hoc communication with different power levels for message header and payload**
Drahtlose ad hoc Kommunikation mit unterschiedlicher Sendeleistung für Kopf und Nutzlast der Nachrichten
Communication sans fils ad hoc avec niveaux de puissance differents pour l'en-tête et la charge utile des messages

(43) Date of publication of application: 10.11.2004
(73) Proprietor: TELEFONAKTIEBOLAGET LM ERICSSON (publ), 164 83 Stockholm (SE)
(72) Inventor: Wilhelmsson, Leif, 240 10 Dalby (SE); Taori, Rakesh, 5658 AZ Eindhoven (NL)
(74) Representative: Boesen, Johnny Peder

(56) References cited:
- WO-A-01/58077
- WO-A-02/41521
- US-A1- 2003 069 988
- US-B1- 6 463 073

## Description

This invention relates to the communication of messages among a number of radio communications devices via a communications medium and, more particular, to wireless communications systems operating in an uncoordinated radio environment.

Personal radio communications devices like PDAs, mobile telephones, etc., are becoming increasingly popular and are produced at an acceptable cost, size and power consumption.

It is a desirable feature of such radio communications devices to be able to be operated in uncoordinated radio environments, e.g. in order to provide ad-hoc connectivity to other such devices for the exchange of data, services, or the like, in an efficient manner. In contrast to, for example, a public mobile telephone network, an uncoordinated radio environment is not based on any hierarchical scheme with fixed infrastructure of base stations and portable terminals that communicate with the base stations via radio signals. In an uncoordinated radio environment there is no central controller that can, for example, take care of resource or connection management, or provide other support services.

Such an uncoordinated radio communications system may be applied in an unlicensed band with a suitable capacity, thereby allowing a communications device to be used essentially world-wide. A suitable band is the ISM (Industrial, Scientific and Medical) band at 2.45 GHz, which is globally available. The band provides 83.5 MHz of radio spectrum. An example of a short range radio technology particularly suited for personal area applications is Bluetooth. Bluetooth is a technology that is designed for operation in the ISM band and that provides low cost, low power implementations of radios. Using Bluetooth it is possible to connect personal devices in an ad-hoc fashion in so-called piconets.

In an uncoordinated scenario like a Bluetooth ad-hoc network, a large number of ad-hoc Bluetooth connections may coexist in the same area without any mutual coordination. Hence, tens of ad-hoc links may need to share the same medium at the same location in an uncoordinated fashion. Several independent networks may overlap in the same area, and some devices may participate in more than one of these networks. This situation is sometimes referred to as a scatter ad-hoc environment. Scatter ad-hoc environments consist of multiple networks, each containing only a limited number of devices.

The general problems of such uncoordinated systems include the problems of coexistence and access control: An uncoordinated system deployed in an unlicensed band inevitably faces interference from other co-existing systems, e.g. other systems deployed in the same band. Furthermore, within an uncoordinated system, access to the communications medium has to be provided to multiple devices in an efficient manner and without causing access conflicts.

In Bluetooth, for instance, all devices are equal in the sense that any two devices can set up a connection, i.e. Bluetooth provides peer-to-peer communications. However, in order to provide access control to the communications medium Bluetooth deploys a "Master-Slave" principle at the Medium Access Control (MAC) layer, wherein one devices assumes the role of a Master and controls the access to the communications channel in real-time. Although any device can take on the role of the Master, the Master does play a central role, and absence of this device disintegrates the network at least temporarily until another device takes on the Master role and communication can resume.

In order to increase flexibility of the traffic exchange on a communications channel, International patent application WO 01/58077 discloses a MAC scheme with a distributed control using implicit token exchange instead of a centralized control as in the master-slave configuration of the Bluetooth piconet. This prior art system implements a Ping-Pong protocol between a plurality of devices based on a token concept. The Ping-Pong protocol offers a distributed control and enables peer-to-peer communication. Absence of any one device does not influence the communication between other devices.

Furthermore, power control, i.e. the regulation of the transmission power, is a known mechanism that supports co-existence enabling multiple systems to be deployed in the same unlicensed band. The basic idea behind power control is to reduce the output power of the transmitted signals as much as possible. In this way the interference towards other devices is kept at a minimum, thereby being beneficial in terms of coexistence. Another advantage of power control is that the power consumption is kept as low as possible, thereby prolonging the battery life of a device.

International patent application WO 00/18033 discloses a power control scheme for an uncoordinated frequency-hopping radio system in which the power control for a single radio link is based on measurements of received packets of which the address is received correctly by the recipient.

Even though the above prior art system provides power control in an uncoordinated radio system, the power control is merely a per-link power control, i.e. suitable only in situations where the entire information of each message or data packet is intended for a predetermined recipient or group of participants of that particular message. The above prior art fails to address the problem of providing efficient power control in a system comprising multiple active links in an uncoordinated environment where there is a need for synchronisation between all participating communications devices.

WO 02/41521 relates to power management in a wireless ad-hoc network. According to this prior art method, the ad-hoc network is divided in clusters of neighbouring communications units. Messages are then communicated via a number of intermediate hops. Furthermore, special Beacon messages are sent at maximum transmit power in order to optimise the relation between power consumption and the number of hops necessary.

US 6,463,073 describes a power management method in a TDMA system, in particular for the downlink communication of the base station to a mobile unit. According to this prior art method, each data slot is divided in a header part, a data part and a ramp part. During normal transmission, the header and the data part are transmitted at a transmit power sufficient for the mobile unit to receive the data. During the ramp part, the transmit power is adjusted to the suitable power for the next slot. In case of pauses in the data transmission, the header is still transmitted at the sufficiently high level, while the transmit power is ramped down at the beginning of the data part to a lower power level in order to reduce interference.

The above and other problems are solved by a method of communicating messages among a number of radio communications devices of a communications system for operation in an uncoordinated radio environment including multiple active links, via a communications medium, each of said messages comprising a message header and a message payload, the method comprising
transmitting the message header of a first message, where the first message is to be transmitted from a first one of the number of radio communications devices to at least a second one of the number of radio communications devices, at a first power level high enough to enable each of the number of radio communications devices to receive the message header;
transmitting the message payload of the first message at a second power level determined separately from the first power level to be high enough to enable the second radio communications device to receive the message payload.

In particular, the transmission power for the message header and the message payload is determined separately, such that it is ensured that message headers are received by all communications devices of the communications system, while the payload only needs to be received by the device(s) to which the message is addressed.

Hence, a mechanism is provided for transmissions where several active links are addressed simultaneously, at least part of the time, i.e. transmissions where different parts of a message or data packet should be received by different groups of recipients, e.g. in order to provide synchronisation between the communications devices. In particular, in a communications system where access to the communications medium is controlled in a distributed manner it is important that all devices remain synchronised.

Hence, a power control mechanism is provided which ensures synchronisation of all communications devices of a communications system by ensuring that the header information is received by all participating devices.

By determining the transmission power for the payload separately to ensure that the recipient of the payload is able to receive the payload, the interference with other uncoordinated systems using the same band is minimised. Furthermore, the power consumption of the communications devices is minimised as well. In general, the transmission power of the payload is smaller than the transmission power for the header, since the transmission power for the payload is preferably selected as small as possible but still sufficiently high to achieve an acceptable error rate of reception by the device to which the payload is addressed.

The transmission power for the payload may be determined using a known power control scheme between the transmitting device and the receiving device or devices, such as closed-loop control schemes.

Hence, in one embodiment, the power level for the payload is determined by
- transmitting a first message from the first radio communications device to the second radio communications device;
- receiving a response message by the first radio communications device from the second radio communications device, the response message comprising information about a reception quality of the first message by the second radio communications device; and
- determining the power level for the payload from the received information about the reception quality.

It is understood that the payload may be directed to more than one recipient, e.g. in a multicasting scenario. In this situation, the transmission power is determined by the recipient requiring the highest transmission power.

In one embodiment, the transmission power for the message header is fixed at a predetermined constant level, thereby achieving a particularly simple system. In another embodiment, the transmission power is determined based on the transmission powers determined for the payload. For example, the transmission power for the message header may be selected corresponding to the largest transmission power of the power levels determined for the devices of the system, thereby avoiding an unnecessary high transmission power for the headers.

In packet based transmission protocols, a message is sent as a data packet having a packet header that is typically prepended to the payload. The packet header includes information to be used by the receiver during the processing of the received packet. For example, the header may include addressing information, information identifying the sender, length information indicating the length of the packet, sequence information relating to the order of transmitted packets in a sequence, information about the payload, e.g. related to encoding schemes, cryptographic security schemes, etc. In a communications system with distributed control, at least some of the header information is used for the coordination of the transmissions of the devices of the system. For example, the header may comprise synchronisation information, length information, address in formation, etc. Hence, it is important that all communications devices of the communications system are able to receive the header information necessary for the control of the communication. Hence, the term header is intended to refer to a portion of a message comprising information which is intended to, or at least useful for, all devices of a communications network, while the portion of the message which is only directed to one or a certain group of recipients is referred to as payload.

Since the transmission power is selected for the message header and the message payload separately, the transmitting communications device, adjusts the transmission power during the transmission of a message, e.g. a packet of a packet-based protocol.

It is an advantage of the invention that it provides efficient power control in a communications system with distributed control.

In one embodiment, the transmission power is adjusted by ramping down the transmission power from a first power level to a second power level at the end of the header information, i.e. starting after the transmission of the header information is completed. Preferably, the transmission power is ramped down over a time period sufficiently long for an automatic gain control module at the receiving communications device to adapt the receiver gain.

It is understood that, in an embodiment where the header information is located at a different position within the message, the power control is performed accordingly.

The term radio communications device comprises any device comprising suitable circuitry for receiving and/or transmitting radio communications signals. Examples of such devices include portable radio communications equipment and other handheld or portable devices. The term portable radio communication equipment includes all equipment such as mobile telephones, pagers, communicators, i.e. electronic organisers, smart phones, personal digital assistants (PDAs), handheld computers, or the like.

In a preferred embodiment, the radio communications device is adapted to communicate with other communications devices of an uncoordinated communications system, e.g. a peer-to-peer communications system without central control, in particularly a communications system where multiple devices access a common communications medium.

Further preferred embodiments are disclosed in the dependant claims.

The present invention can be implemented in different ways including the method described above and in the following, a radio communications system, and further product means, each yielding one or more of the benefits and advantages described in connection with the first-mentioned method, and each having one or more preferred embodiments corresponding to the preferred embodiments described in connection with the first-mentioned method and disclosed in the dependant claims.

The above and other aspects of the invention will be apparent and elucidated from the embodiments described in the following with reference to the drawing in which:
fig. 1 shows a diagram illustrating an example of a peer-to-peer communications network;
fig. 2 illustrates a communications scenario exemplifying a token based Ping-Pong protocol including a multiple access scheme;
fig. 3 shows a block diagram of a communications device;
fig. 4 schematically illustrates an example of power levels during the transmission of a single packet over a communications medium;
fig. 5 schematically illustrates another example of power levels during the transmission of a single packet over a communications medium;
fig. 6 shows a flow diagram of a power control scheme; and
fig. 7 shows a diagram illustrating an example of a communications network using a master-slave scheme.

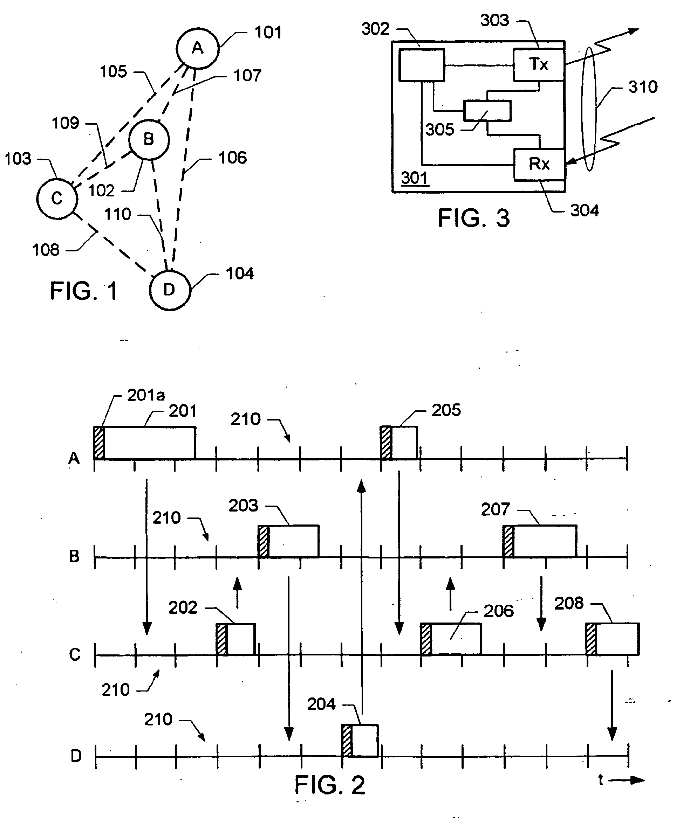

Fig. 1 shows a diagram illustrating an example of a peer-to-peer communications network. The communications network comprises radio communications devices 101, 102, 103, and 104, generally labelled A, B, C, and D, respectively. Each of the communications devices can send messages to each one of the other communications devices via corresponding channels 105, 106, 107, 108, 109, and 110 of a communications medium. In this topology, none of the radio communications devices plays the role of a Master device or central controller which controls the access to the communications medium. The access of the communications devices is controlled in a distributed manner, instead, i.e. the control is distributed among the communications devices of the network. An example of a protocol that provides such a distributed multi access control will be described in connection with fig. 2.

Fig. 2 illustrates a communications scenario exemplifying a token based Ping-Pong protocol including a multiple access scheme. Fig. 2 illustrates a sequence of packets transmitted among four radio communications devices designated A, B, C, and D, e.g. the devices shown in fig. 1. The communications channel carrying the information between the devices is divided into a number of time-division slots as indicated by the timelines 210.
Packets 201, 202, 203, 204, 205, 206, 207, and 208 are transmitted among the devices. Transmission of each packet starts at a slot boundary and may occupy the channel for a variable amount of time. In the example of fig. 2, device A starts by transmitting a packet 201 directed to device C. After device A has finished the transmission of packet 201, device C is allowed to transmit. The packet 201 comprises a header portion 201a including a destination address and length information about the length of the packet 201, e.g. measured in bytes, or the like, as will be described in greater detail below. From the length information in the header 201a of the message 201 sent by device A, device C knows when it can transmit. Hence, when the transmission of packet 201 is completed, device C starts transmitting a packet 202 which, in this example, is directed towards device B.

Likewise, devices B and D can detect from the header information in header 201 a of packet 201 that the transmission of packet 201 from device A is directed towards device C, and they can extract the length information. Consequently, devices B and D can stop receiving until the end of the transmission of packet 201 from device A, thereby reducing their power consumption.

The same mechanism is subsequently employed for the transmission of packets 202, 203, 204, 205, 206, 207, and 208, as illustrated in fig. 2: Each time a device has received a packet, the receiving device transmits a packet to one of the other devices.

The Ping-Pong protocol described above forms the basis for the Multiple Access Control (MAC) mechanism on the radio channel of a communications network. Synchronisation in the network, based on this protocol, is maintained by tracking the header of each transmission. The above ping-pong protocol is described in greater detail in international application WO 01/58077.

The above ping-pong protocol provides a distributed control and enables peer-to-peer communication. Absence of any one of the devices does not stall communication between the other devices.

As will be described in greater detail below, the transmission power level is adjusted during the transmission of a packet sent between two of the devices such that the part of the packet that includes information necessary for synchronisation is transmitted using an agreed upon power level. Hence, all devices participating on the radio channel remain synchronised. As the relevant synchronisation information, e.g. about as the duration of the transmission, is included in the packet headers, only the packet headers are transmitted at power levels such that all devices receive that transmission. The rest of the packet, i.e. the payload, is transmitted at a power level appropriate for the intended receiver.

Fig. 3 shows a block diagram of a communications device. The communications device 301 comprises a processing unit 302, a radio transmitter 303 connected to the processing unit, a radio receiver 304 connected to the processing unit, and a power control circuit 305 connected the radio transmitter.

The processing unit generates messages to be transmitted to one or more other communications device(s), e.g. including dividing messages into smaller messages or packets and/or generating header information and/or the like according to the communications protocol employed. The data packets to be transmitted are fed to the transmitter 303. Similarly, when data packets are received from another communications device by the receiver 304, the data packets are forwarded to the processing unit for further processing, e.g. the extraction of the received information, error checking, etc. The processing unit 302 further provides access control, e.g. as described in connection with fig. 2, i.e. by extracting length information, address information and/or other synchronisation information from the received packets and controlling the transmission of packets accordingly.

The radio transmitter 303 transmits the data packets, received from the processing unit, via the radio channel 310 employed by the communications network, and the radio receiver 304 receives data packets and forwards them to the processing unit 302. In some embodiments, the transmitter and receiver may process the data packet, e.g. by adding further header information before transmission and removing such information after receiving data, or the like. For example, the radio transmitter 303 may be a transmitter transmitting in a suitable radio band, e.g. the ISM band at 2.45 GHz, and the radio receiver 304 may be a corresponding receiver. For example, the communications network may be generally based on the Bluetooth air interface which defines a frequency-hopping (FH) channel using a basic rate of 1 Mb/s in the 2.45 GHz ISM band. In one embodiment, the communications network is a Bluetooth piconet, and the radio channel is a high rate static channel using a selected broadband channel, e.g. 4MHz, e.g. as described in international patent application WO 02/05448. Furthermore, in one embodiment, a distributed access control to the channel is employed using implicit token exchange, e.g. as described in connection with fig. 2, rather than a centralized control as in the master- slave configuration of a conventional Bluetooth piconet, thereby increasing the flexibility of the traffic exchange on the high-rate channel.

The power control unit 305 controls the power level at which the radio transmitter 303 transmits the data packets. The power control unit 305 is further connected to the receiver 304 and/or the processing unit, and it receives information about power control signals received from other communications devices indicating whether the transmission power level is sufficiently high to ensure acceptable reception at the receiving communications device. In particular, the power control unit is adapted to adjust the power level during the transmission of a packet, as will be described in greater detail below.

It is noted that the communications device may comprise further components which have been omitted in the schematic block diagram of fig. 3. For example, the communications device may further comprises an automatic gain control (AGC) unit connected to the receiver, a decoder, an encoder, or the like.

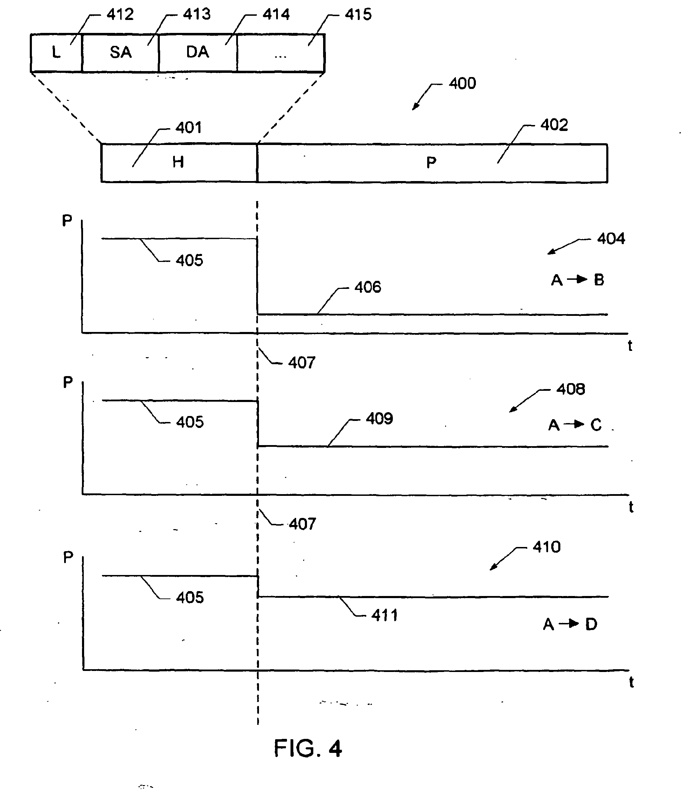

Fig. 4 schematically illustrates an example of power levels during the transmission of a single packet over a communications medium. In the example of fig. 4 it is assumed that a packet 400 is transmitted from one device, e.g. device A of fig. 1, to another device, e.g. one of the devices B, C, and D in fig. 1. The power level required for a reliable transmission to another device depends on the channel properties, e.g. the amount of noise or other distortions, the distance to the destination, the properties of the receiver, etc.

Power control methods for determining a suitable power level for a transmission from a transmitter to a receiver via a given link are known in the art as such, see e.g. US patent no. 5,465, 398 or international patent application WO 00/18033. In such methods, the power control at the transmitter is typically based on a closed-loop power control algorithm, in which the recipient informs the sender to increase or decrease the transmission power depending on the receive conditions. In one embodiment, the receiver determines a received signal strength indication (RSSI) and sends this indication to the sender. For example, the sender may control its power level based on the lowest RSSI value of a successfully received packet, thereby reducing the transmission power level to an acceptable minimum in order to maintain acceptable link quality.

Diagrams 404, 408, 410 show examples of power levels during the transmission of a packet 400 from a device A to device B, C, or D, respectively.

The packet 400 comprises a header 401 and a payload portion 402. The header 401 comprises a length indicator 412 that indicates the length of the payload of the packet 400. For example, the length indicator may indicate the number of bytes of the payload. Alternatively, the length of the payload may be specified using a different length measure. For example, in an embodiment where the payload is further divided into segments of fixed length during transmission, the length indicator may indicate the number of such segments. The header 401 further comprises a source address field 413 and a destination address field 414 and optionally one or more further fields 415. For example, the header may include information about what kind of data is following in the remaining part of the packet, how this data is modulated and coded, etc. The header may further include information related to link control, such as information about the retransmission control, e.g. ACK/NACK for an automatic retransmission query (ARQ) scheme, and flow control providing the status of different buffers.

Diagram 404 schematically shows the power level P during the transmission of the packet 400 from device A to device B. The header 401 is transmitted at a power level 405, while the payload 402 is transmitted at a power level 406 that is smaller than the power level 405.

The power level 405 for the transmission of the header 401 is selected high enough for the header to be received by all devices of the communications network, i.e. in this example by devices B, C, and D.

The power level 406 is selected high enough for the receiving device to receive the payload, i.e. in the example of diagram 404 device B. Preferably, the power level 405 is optimised for the specific link between device A and B in order to ensure reception by device B on the one hand and, on the other hand, to cause as little interference to other devices and as little power consumption as possible. This power level may be considerably lower than the power level 405 required for a transmission to all devices of a network. In the worst case, the power level 406 is equal to the power level 405.

Diagrams 408 and 410 illustrate corresponding power levels for transmission to devices C and D, respectively.

In all cases, the header 401 is transmitted at the same power level 405 as described above, while the power levels 409 and 411 for transmitting the payload are different in both cases. In the example of fig. 4, it is assumed that a transmission from device A to device D requires the highest power level, while the transmission from device A to device B requires the lowest. This corresponds to the example of fig 1, in which device B is closest to device A, while device D is furthest away, thereby posing the hardest requirements on the transmission power assuming the same link properties for all devices.

In one embodiment, the power level 405 for the transmission of the header is selected at a predetermined maximum power level, thereby determining an effective range of the communications network. Hence, in this embodiment, no power control is performed for the header, thereby allowing a simple implementation. Alternatively, the power level for the header may be determined dynamically. For example, the power level for the header may be selected to be the largest one of the power levels determined for the payload, i.e., in the example of fig. 4, the largest power level of power levels 406, 409, and 411. In another embodiment, the power level for the header may be determined to be the largest one of the power levels for the payload plus a predetermined safety margin, or the like.

Since the duration of the header is typically much shorter than the duration of the payload, the average power consumption is greatly reduced by the above described power control scheme, even if the power is regulated only for the transmission of the payload. It should be noted that this power saving is achieved without any performance loss for the system, since the two power levels are chosen so as to guarantee the performance for the respective part.

As already discussed, the reduction in transmitted power does not only mean longer battery lifetime, but it also greatly decreases the interference caused to other devices operating within the same frequency band, thus being beneficial from a coexistence point of view. In particular, a synchronisation of all participating devices may be achieved while reducing the average transmission power, thereby improving the coexistence properties and power consumption.

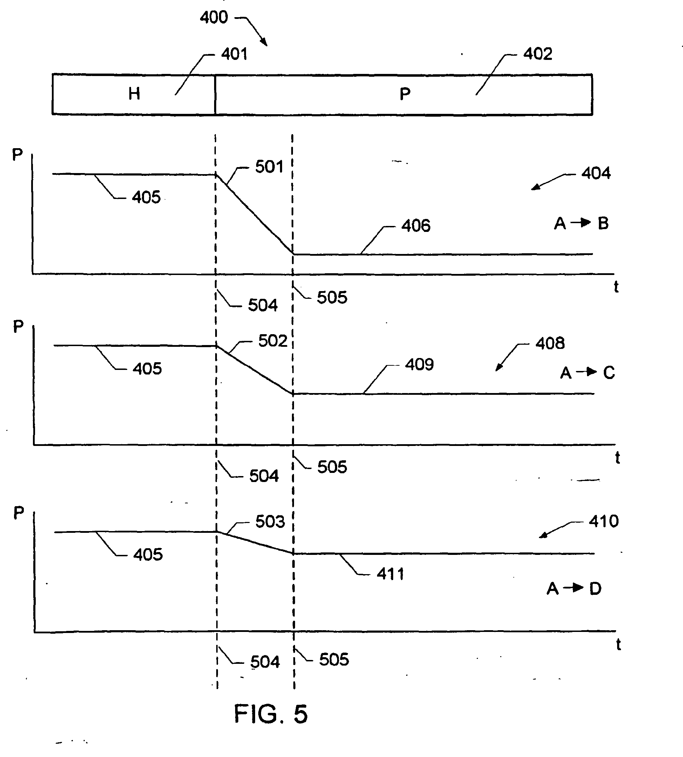

It should further be noted that the diagrams of fig. 4 merely serve as an illustration. In particular, in a practical implementation the power level will not be changed instantaneously, as indicated in fig. 4, but changed smoothly over a predetermined period of time, as will be illustrated in fig. 5.

Fig. 5 schematically illustrates another example of power levels during the transmission of a single packet over a communications medium. As in fig. 4, it is again assumed that a packet 400 including a header 401 and payload 402 is transmitted from a device A to one of the devices B, C, and D, e.g. as illustrated in fig. 1. Diagrams 404, 408, 410 show examples of power levels during the transmission of a packet 400 from a device A to device B, C, or D, respectively.

As above, the header 401 is transmitted at a high power level 405 ensuring that the header information is received by all devices in the network, while the power levels 406, 409, and 411 are determined as to ensure the payload to be received by the device towards which the payload is directed, as was described in connection with fig. 4.

In contrast to fig. 4, the power level is ramped down from the higher power level 405 to the lower power levels 406, 409, and 411, respectively, thereby providing a smooth transition from the high power level to the lower power levels over a transition period indicated by the dashed lines 504 and 505 indicating the end of the header and a later time at which the lower power level is reached, respectively.

In the example of fig. 5, the length of the transition period is the same in all three cases, i.e. independent of the final power level 406, 409, and 411, respectively. Hence, the slopes 501, 502, and 503 of the ramp depend on the difference in power levels. Alternatively, the slope may be selected to be constant, thereby causing the length of the transition period to depend on the difference in power levels.

It is further understood that transition types other than a linear ramping may be used.

It is noted that in some architectures, e.g. in limiting receiver architectures, the transmission power level does not have to be known by the receiver. However, in other architectures, at least some of the transmitted information is encoded as amplitude information. In these architectures, the received power level is typically estimated locally at the receiver. An example of a modulation format where the amplitude includes information is quadrature amplitude modulation M-QAM, where M is greater than 4. Furthermore, in systems with a linear receiver the power level has to be estimated even if no information is transmitted in the amplitude. The reason is that, in this case, the signal is converted from analogue to digital by means of and analogue-to-digital converter (ADC). However, due to limited dynamic range of the receiver, automatic gain control (AGC) has to be deployed.

If the power level was constant during the entire transmission of the packet, the power of the received signal could be measured at the start of a packet, and then the AGC could be set based on this measurement. For instance, if the received power is very high the AGC effectively attenuates the signal with a large amount, whereas no attenuation is applied, if the received signal is weak.

On the other hand, in a situation where the power level is not constant throughout the entire packet, as is the case in the systems described here, then the AGC may be adjusted continuously. Hence, in the above situation, it is desirable that the AGC is able to track the variations of the transmission power reasonably well. Hence, the transmitter should ramp down the power sufficiently slow for the change to be easily tracked by the AGC at the receiving end. On the other hand, the transition period should be small compared to the length of the payload, in order to provide an effective reduction of the average transition power, e.g. of the order a few % of the entire packet length.

For example, in a typical example, the packet 400 may be a few ms long, while the header 401 may be of the order of 40-50 µs long. In this case an example of a suitable transition period which still allows a tracking by the AGC is approx. 5-10 µs, i.e. a negligible percentage of the packet duration.

It is further understood that, in one embodiment, the known power levels for the header and the payload are used in the AGC tracking.

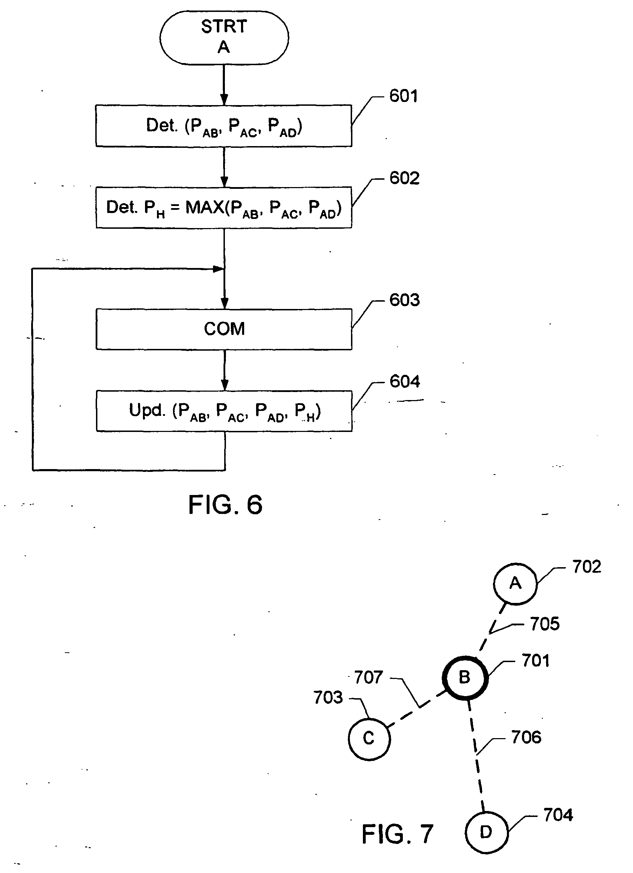

Fig. 6 shows a flow diagram of a power control scheme. The power control scheme is illustrated by means of an example of a communications network comprising devices A,B,C,D, e.g. as described in connection with fig. 1. The flow diagram of fig. 6 illustrates the power control performed by device A, e.g. in a situation where device A enters an uncoordinated ad-hoc network, e.g. a Bluetooth piconet.

In an initial step 601, the power levels providing acceptable link quality are negotiated between device A and the remaining devices, resulting in a power level for each of the links A to B, A to C, and A to D. These power levels are labelled P_{AB}, P_{AC}, and P_{AD}, respectively. The power levels may be negotiated by any known power control scheme, e.g. a closed-loop scheme based on RSSI messages as described above. In one embodiment, the headers of the messages sent during the above negotiation of power levels are transmitted at a predetermined maximum power level to ensure that they are received by all devices of the network.

In step 602, the power level P_{H} for transmitting header information is determined as the maximum of the power levels determined in step 601. In one embodiment, a predetermined safety margin is added to the determined maximum, i.e. P_{H} = max(P_{AB}, P_{AC}, P_{AD}) + c, where c≥0.

Hence, the power level for the header is determined by
- transmitting at least one message by a first radio communications device to each of the other radio communications devices;
- receiving respective response messages by the first radio communications device from the other radio communications devices, the response message comprising information about a reception quality of the respective at least one message by a corresponding radio communications device; and
- determining the power level for the header from the received information about the reception quality from the other radio communications devices.

In subsequent step 603, regular communication between device A and one or more of the other devices B, C, and D is performed. The messages transmitted by device A are transmitted at the power levels determined in the previous steps, i.e. the message headers are transmitted at power level P_{H} and the payload at one of the power levels P_{AB}, P_{AC}, or P_{AD}, depending on which device a message is directed towards.

If a message is directed to more than one device, the power level may be determined accordingly, i.e. large enough for all the intended recipients to be able to receive the message. For example if a message is directed towards devices B and C, device A may transmit the message at a power level P=max(P_{AB}, P_{AC}).

In step 604, the power levels P_{AB}, P_{AC}, P_{AD}, and P_{H} are updated before communication continues at step 603. The frequency at which the power levels are updated depends on the actual power control scheme employed for the individual links. For example, for a given link, a power control message may be sent by the receiver to the sender, if one message was received with a RSSI larger than a predetermined threshold or if one message was received unsuccessfully, e.g. as detected by an error detection mechanism such as a checksum. In other embodiments a power control message is sent based on an average RSSI over a number of messages, etc. In any case, once one of the power levels for the individual links P_{AB}, P_{AC}, P_{AD} is changed, the power level P_{H} may need to be updated as well.

In one embodiment, the update of power levels may further comprise a periodic renegotiation of power levels with one or more of the devices. This may be advantageous, in particular in a distributed access control scheme, if one of the devices only receives and/or transmits few messages from/to the other devices, in order to ensure that this device still receives all header information and, thus, ensuring synchronisation at all times.

Hence, in the method described above, power control is applied to both parts of the packets, i.e. the header part intended to all devices and the payload part intended only for one device. The part intended for all devices is transmitted with a power which effectively is determined by the receiving device with the hardest requirement, whereas the part transmitted to a specific device is transmitted at a power level suitable for that particular device.

In an alternative embodiment, no power control is used for the part transmitted to all devices, but the maximum power is used to ensure that all devices will receive the message. The second part, intended for a specific device, is still transmitted at a power level optimized for this particular device.

It is understood that the power control mechanism disclosed herein is not limited to networks with distributed access control, but may advantageously be applied to other networks as well. In particular, it may also be applied to a system where the access to the channel is regulated centrally, e.g. in a situation where a transmitter sends information over the channel, and where only a part of the transmitted information is to be received by all the devices. In such a case only the part intended to all devices is transmitted at a power level suitable for reception by all devices. The rest can be transmitted at a power level suitable for the specific receiver(s). This will be illustrated by the following example.

Fig. 7 shows a diagram illustrating an example of a communications network using a master-slave scheme, i.e. a centralized control mechanism for accessing the communications media as applied in Bluetooth. The topology is a star like configuration comprising a master device 701 and a number of slave devices 702, 703, and 704. In this topology, there is a communications link between each of the slave devices and the master device, as illustrated by the dashed lines 705, 706, and 707. The Master device 701 regulates access to the medium, for instance, by polling each slave individually. A slave does not transmit unless polled by the Master. Power control can now be exercised on each link separately. Accordingly, under comparable link conditions, i.e. when the transmission power depends on the distance between transmitter and receiver, the transmission power needed to communicate on Link 705 can be lower that that needed on link 706. Note, however, that although power control can be implemented individually for each one of the links 705, 706, and 707, this is not always the most optimal solution. In Bluetooth, among other things, the header contains information on the intended receiver and the duration of the packet. The latter is useful to be heard by all devices in that the devices which are not the intended receivers can suspend reception and, thus, save power.

Hence, a power control scheme where the power level is adjusted during transmission of a message as described herein may advantageously be applied in a centralised control scenario as well.

Another example of centralised control is what is observed in cellular telephony where all the intelligence resides in the base station. Power control can be exercised from the base station.

Hence, in the above a power control scheme is described in which the transmission of a message is divided into two parts, one part that is intended for all devices in the communications network, and another part that is intended only for one device or a group of devices within the network.

It will be appreciated by a skilled person that the exact contents of the two parts are not essential, but that the idea is based on the observation that one part is intended for, or at least can be used by, all devices, whereas the second part is of interest for one device, or group of devices, only.

## Claims

1. A method of communicating messages among a number of radio communications devices of a communications system for operation in an uncoordinated radio environment including multiple active links, via a communications medium, each of said messages comprising a message header and a message payload, the method comprising
transmitting the message header of a first message, where the first message is to be transmitted from a first one of the number of radio communications devices to at least a second one of the number of radio communications devices, at a first power level high enough to enable each of the number of radio communications devices to receive the message header;
**characterised in that** the method further comprises
transmitting the message payload of the first message at a second power level determined separately from the first power level to be high enough to enable the second radio communications device to receive the message payload.

2. A method according to claim 1, wherein the second power level is smaller than the first power level.

3. A method according to claim 1 or 2, wherein the communications system comprises an access control mechanism for controlling access of the number of radio communications devices to the communications medium, the access control mechanism being distributed among the number of radio communications devices; and wherein the message headers comprise synchronisation information for use in said distributed access control mechanism.

4. A method according to any one of claims 1 through 3, wherein the step of transmitting the message payload further comprises decreasing the transmission power from the first power level to the second power level over a predetermined transition period.

5. A method according to claim 4, wherein predetermined transition period is sufficiently long for an automatic gain control module at the second radio communications device to adapt the receiver gain.

6. A method according to any one of claims 1 through 5, wherein the first power level is a predetermined constant power level.

7. A method according to any one of claims 1 through 6, wherein the communications system is a peer-to-peer communications system.

8. A method according to any one of claims 1 through 7, wherein the communications medium is an unlicensed radio band, preferably the ISM band.

9. A method according to any one of claims 1 through 8, wherein the communications system is operated according to the Bluetooth standard.

10. A method according to any one of claims 1 through 9, further comprising determining the second power level by
- transmitting a first message from the first radio communications device to the second radio communications device;
- receiving a response message by the first radio communications device from the second radio communications device, the response message comprising information about a reception quality of the first message by the second radio communications device; and
- determining the second power level from the received information about the reception quality.

11. A method according to any one of claims 1 through 10, further comprising determining the first power level by
- transmitting at least one message by the first radio communications device to each of the other radio communications devices;
- receiving respective response messages by the first radio communications device from the other radio communications devices, the response message comprising information about a reception quality of the respective at least one message by a corresponding radio communications device; and
- determining the first power level from the received information about the reception quality from the other radio communications devices.

12. A radio communications system for operation in an uncoordinated radio environment including multiple active links, the radio communications system comprising a number of radio communications devices each comprising
a transmitter unit (303) for communicating messages to at least another one of the communications devices via a communications medium, each of said messages comprising a message header and a message payload;
a power control unit (305) for controlling a transmission power of the transmitter unit; wherein the power control unit is adapted
- to select a first power level for transmitting the message header of a first message, where the first message is to be transmitted to a first one of the number of radio communications devices, the first power level being selected high enough to enable each of the number of radio communications devices to receive the message header; and
- to select a second power level for transmitting the message payload of the first message , the second power level being determined separately from the first power level to be high enough to enable the first radio communications device to receive the message payload.

13. A radio communications device for use in a radio communications system for operation in an uncoordinated radio environment including multiple active links, the radio communications system including a number of other radio communications devices, the radio communications device comprising
a transmitter unit (303) for communicating messages to at least another one of the communications devices via a communications medium, each of said messages comprising a message header and a message payload;
a power control unit (305) for controlling a transmission power of the transmitter unit; wherein the power control unit is adapted
- to select a first power level for transmitting the message header of a first message, where the first message is to be transmitted to a first one of the number of radio communications devices, the first power level being selected high enough to enable each of the number of radio communications devices to receive the message header; and
- to select a second power level for transmitting the message payload of the first message, the second power level being determined separately from the first power level to be high enough to enable the first radio communications device to receive the message payload.

## Patentansprüche

1. Verfahren der Kommunizierung von Nachrichten zwischen einer Zahl von Funkkommunikationseinrichtungen eines Kommunikationssystems zum Betreiben in einer mehrfach aktive Links enthaltenden unkoordinierten Funkumgebung über ein Kommunikationsmedium, wobei jede der Nachrichten einen Nachrichten-Header und eine Nachrichten-Nutzinformation umfasst, und wobei das Verfahren umfasst:
Senden des Nachrichten-Headers einer ersten Nachricht, wobei die erste Nachricht von einer ersten der Zahl von Funkkommunikationseinrichtungen an zumindest eine zweite der Zahl der Funkkommunikationseinrichtungen auf einem ersten Leistungspegel gesendet werden soll, der hoch genug ist, es jeder der Zahl der Funkkommunikationseinrichtungen zu ermöglichen, den Nachrichten-Header zu empfangen;
**dadurch gekennzeichnet, daß** das Verfahren weiterhin umfasst
Senden der Nachrichten-Nutzinformation der ersten Nachricht auf einem zweiten Leistungspegel, der separat von dem ersten Leistungspegel bestimmt wird, um hoch genug zu sein, es der zweiten Funkkommunikationseinrichtungen zu ermöglichen, die Nachrichten-Nutzinformation zu empfangen.

2. Ein Verfahren nach Anspruch 1, wobei der zweite Leistungspegel geringer als der erste Leistungspegel ist.

3. Verfahren nach Anspruch 1 oder 2, wobei das Kommunikationssystem einen Zugangssteuermechanismus zum Steuern des Zugangs der Zahl von Funkkommunikationseinrichtungen zu dem Kommunikationsmedium umfasst, wobei der Zugangssteuermechanismus unter der Zahl von Funkkommunikationseinrichtungen verteilt wird, und wobei der Nachrichten-Header eine Synchronisationsinformation zur Nutzung in dem verteilten Zugangssteuermechanismus umfasst.

4. Verfahren nach irgendeinem der Ansprüche 1 bis 3, wobei der Schritt des Sendens der Nachrichten-Nutzinformationen weiterhin eine Verringerung der Übertragungsleistung von dem ersten Leistungspegel zu dem zweiten Leistungspegel während einer vorbestimmten Übergangsperiode umfasst.

5. Verfahren nach Anspruch 4, wobei die vorbestimmte Übergangsperiode ausreichend lang für ein automatisches Verstärkersteuerungs-Modul an der zweiten Funkkommunikationseinrichtung ist, um die Empfängerverstärkung anzupassen.

6. Verfahren nach irgendeinem der Ansprüche 1 bis 5, wobei der erste Leistungspegel ein vorbestimmter konstanter Leistungspegel ist.

7. Verfahren nach irgendeinem der Ansprüche 1 bis 6, wobei das Kommunikationssystem ein peer-to-peer Kommunikationssystem ist.

8. Verfahren nach irgendeinem der Ansprüche 1 bis 7, wobei das Kommunikationsmedium ein nichtlizensiertes Funkband ist, vorzugsweise das ISM-Band.

9. Verfahren nach irgendeinem der Ansprüche 1 bis 8, wobei das Kommunikationssystem gemäß des Bluetooth-Standards arbeitet.

10. Verfahren nach irgendeinem der Ansprüche 1 bis 9, das weiterhin ein Bestimmen des zweiten Leistungspegels umfasst durch
- ein Senden einer ersten Nachricht von der ersten Funkkommunikationseinrichtung an die zweite Funkkommunikationseinrichtung;
- ein Empfangen einer Antwort-Nachricht durch die erste Funkkommunikationseinrichtung von der zweiten Funkkommunikationseinrichtung, wobei die Antwort-Nachricht eine Information über eine Empfangsqualität der ersten Nachricht durch die zweite Funkkommunikationseinrichtung umfasst; und
- ein Bestimmen des zweiten Leistungspegels aus der empfangenen Information über die Empfangsqualität.

11. Verfahren nach irgendeinem der Ansprüche 1 bis 10, das weiterhin ein Bestimmen des ersten Leistungspegels umfasst durch
- ein Senden von zumindest einer Nachricht durch die erste Funkkommunikationseinrichtung an jede der anderen Funkkommunikationseinrichtungen;
- ein Empfangen von entsprechenden Antwort-Nachrichten durch die erste Funkkommunikationseinrichtung von den anderen Funkkommunikationseinrichtungen, wobei die Antwort-Nachrichten eine Information über eine Empfangsqualität von zumindest einer entsprechenden Nachricht durch eine entsprechende Funkkommunikationseinrichtung umfasst; und
- ein Bestimmen des ersten Leistungspegels aus der empfangenen Information über die Empfangsqualität von den anderen Funkkommunikationseinrichtungen.

12. Funkkommunikationssystem zum Betreiben in einer mehrfach aktive Links enthaltenden unkoordinierten Funkumgebung, wobei das Funkkommunikationssystem eine Zahl von Funkkommunikationseinrichtungen umfasst, wobei jede umfasst:
eine Sendeeinheit (303) zum Kommunizieren von Nachrichten an zumindest eine andere der Kommunikationseinrichtungen über ein Kommunikationsmedium, wobei jede der Nachrichten einen Nachrichten-Header und eine Nachrichten-Nutzinformation umfasst;
eine Leistungssteuereinheit (305) zum Steuern einer Sendeleistung der Sendeeinheit; wobei die Leistungssteuereinheit ausgelegt ist,
- einen ersten Leistungspegel zum Senden des Nachrichten-Headers einer ersten Nachricht zu wählen, wobei die erste Nachricht an eine erste der Zahl von Funkkommunikationseinrichtungen gesendet werden soll, wobei der erste Leistungspegel hoch genug gewählt wird, um es jeder der Zahl von Funkkommunikationseinrichtungen zu ermöglichen, den Nachrichten-Header zu empfangen; und
- einen zweiten Leistungspegel zum Senden der Nachrichten-Nutzinformation der ersten Nachrichten zu wählen, wobei der zweite Leistungspegel separat von dem ersten Leistungspegel bestimmt wird, um hoch genug zu sein, um es der ersten Funkkommunikationseinrichtung zu ermöglichen, die Nachrichten-Nutzinformation zu empfangen.

13. Funkkommunikationseinrichtung zum Nutzen in einem Funkkommunikationssystem zum Betrieb in einer mehrfach aktive Links enthaltenden unkoordinierten Funkumgebung, wobei das Funkkommunikationssystem eine Zahl von anderen Funkkommunikationseinrichtungen enthält, wobei die Funkkommunikationseinrichtung umfasst:
eine Sendeeinheit (303) zum Kommunizieren von Nachrichten an zumindest eine andere der Kommunikationseinrichtungen über ein Kommunikationsmedium, wobei jede der Nachrichten einen Nachrichten-Header und eine Nachrichten-Nutzinformation umfasst;
eine Leistungssteuereinheit (305) zum Steuern einer Sendeleistung der Sendeeinheit; wobei die Leistungssteuereinheit ausgelegt ist
- einen ersten Leistungspegel zum Senden des Nachrichten-Headers einer ersten Nachricht zu wählen, wobei die erste Nachricht an eine erste der Zahl von Funkkommunikationseinrichtungen gesendet werden soll, wobei der erste Leistungspegel hoch genug ausgewählt wird, um es jeder der Zahl von Funkkommunikationseinrichtungen zu ermöglichen, den Nachrichten-Header zu empfangen; und
- einen zweiten Leistungspegel zum Senden der Nachrichten-Nutzinformation der ersten Nachrichten zu wählen, wobei der zweite Leistungspegel separat von dem ersten Leistungspegel bestimmt wird, um hoch genug zu sein, es der ersten Funkkommunikationseinrichtung zu ermöglichen, die Nachrichten-Nutzinformation zu empfangen.

## Revendications

1. Procédé de communication de messages parmi un certain nombre de dispositifs de communications radio d'un système de communications pour un fonctionnement dans un environnement radio non coordonné, comprenant de multiples liens actifs, par l'intermédiaire d'un support de communications, chacun desdits messages comportant un en-tête de message et une charge utile de message, le procédé comprenant
l'émission de l'en-tête de message d'un premier message, où le premier message doit être émis depuis un premier du nombre de dispositifs de communications radio vers au moins un deuxième du nombre de dispositifs de communications radio, à un premier niveau de puissance suffisamment élevé pour permettre à chacun du nombre de dispositifs de communications radio de recevoir l'en-tête de message ;
**caractérisé en ce que** le procédé comprend en outre :
l'émission de la charge utile de message du premier message à un second niveau de puissance déterminé séparément du premier niveau de puissance de façon à être suffisamment élevé pour permettre au deuxième dispositif de communications radio de recevoir la charge utile du message.

2. Procédé selon la revendication 1, dans lequel le second niveau de puissance est inférieur au premier niveau de puissance.

3. Procédé selon la revendication 1 ou 2, dans lequel le système de communications comporte un mécanisme de commande d'accès destiné à commander l'accès du nombre de dispositifs de communications radio au support de communications, le mécanisme de commande d'accès étant réparti parmi le nombre de dispositifs de communications radio ; et dans lequel les en-têtes de message comprennent une information de synchronisation destinée à être utilisée dans ledit mécanisme de commande d'accès réparti.

4. Procédé selon l'une quelconque des revendications 1 à 3, dans lequel l'étape d'émission de la charge utile de message comprend en outre la diminution de la puissance d'émission du premier niveau de puissance au second niveau de puissance sur une période de transition prédéterminée.

5. Procédé selon la revendication 4, dans lequel une période de transition prédéterminée est suffisamment longue pour qu'un module de commande automatique de gain au deuxième dispositif de communications radio adapte le gain du récepteur.

6. Procédé selon l'une quelconque des revendications 1 à 5, dans lequel le premier niveau de puissance est un niveau de puissance constant prédéterminé.

7. Procédé selon l'une quelconque des revendications 1 à 6, dans lequel le système de communications est un système de communications poste-à-poste.

8. Procédé selon l'une quelconque des revendications 1 à 7, dans lequel le support de communications est une bande radio qui n'est pas sous licence, avantageusement la bande ISM.

9. Procédé selon l'une quelconque des revendications 1 à 8, dans lequel le système de communications est mis en oeuvre conformément à la norme Bluetooth.

10. Procédé selon l'une quelconque des revendications 1 à 9, comprenant en outre la détermination du second niveau de puissance en
- transmettant un premier message du premier dispositif de communications radio au deuxième dispositif de communications radio ;
- recevant par le premier dispositif de communications radio un message de réponse provenant du deuxième dispositif de communications radio, le message de réponse comprenant une information concernant une qualité de réception du premier message par le deuxième dispositif de communications radio ; et
- déterminant le second niveau de puissance d'après l'information reçue concernant la qualité de la réception.

11. Procédé selon l'une quelconque des revendications 1 à 10, comprenant en outre la détermination du premier niveau de puissance en
- transmettant au moins un message par le premier dispositif de communications radio à chacun des autres dispositifs de communications radio ;
- recevant par le premier dispositif de communications radio des messages de réponse respectifs provenant des autres dispositifs de communications radio, le message de réponse comprenant une information concernant une qualité de réception du, au moins un, message respectif par un dispositif correspondant de communications radio ; et
- déterminant le premier niveau de puissance d'après l'information reçue concernant la qualité de la réception provenant des autres dispositifs de communications radio.

12. Système de communications radio pour un fonctionnement dans un environnement radio non coordonné comprenant de multiples liens actifs, le système de communications radio comportant un certain nombre de dispositifs de communications radio comportant chacun
une unité à émetteur (303) destinée à communiquer des messages à au moins un autre des dispositifs de communications par l'intermédiaire d'un support de communications, chacun desdits messages comprenant un en-tête de message et une charge utile de message ;
une unité (305) de commande de puissance destinée à commander une puissance d'émission de l'unité à émetteur ; dans lequel l'unité de commande de puissance est conçue
- pour sélectionner un premier niveau de puissance pour l'émission de l'en-tête de message d'un premier message, où le premier message est destiné à être transmis à un premier du nombre de dispositifs de communications radio, le premier niveau de puissance étant choisi de façon à être suffisamment élevé pour permettre à chacun du nombre de dispositifs de communications radio de recevoir l'en-tête de message ; et
- pour sélectionner un second niveau de puissance pour l'émission de la charge utile de message du premier message, le second niveau de puissance étant déterminé séparément du premier niveau de puissance afin d'être suffisamment élevé pour permettre au premier dispositif de communications radio de recevoir la charge utile du message.

13. Dispositif de communications radio destiné à être utilisé dans un système de communications radio pour un fonctionnement dans un environnement radio non coordonné comprenant de multiples liens actifs, le système de communications radio comprenant un certain nombre d'autres dispositifs de communications radio, le dispositif de communications radio comportant
une unité à émetteur (303) destinée à communiquer des messages à au moins un autre des dispositifs de communications par l'intermédiaire d'un support de communications, chacun desdits messages comprenant un en-tête de message et une charge utile de message ;
une unité (305) de commande de puissance destinée à commander la puissance d'émission de l'unité à émetteur ; dans lequel l'unité de commande de puissance est conçue
- pour sélectionner un premier niveau de puissance pour l'émission de l'en-tête de message d'un premier message, où le premier message est destiné à être transmis à un premier du nombre de dispositifs de communications radio, le premier niveau de puissance étant choisi de façon à être suffisamment élevé pour permettre à chacun du nombre de dispositifs de communications radio de recevoir l'en-tête de message ; et
- pour sélectionner un second niveau de puissance pour l'émission de la charge utile de message du premier message, le second niveau de puissance étant déterminé séparément du premier niveau de puissance afin d'être suffisamment élevé pour permettre au premier dispositif de communications radio de recevoir la charge utile du message.
